# FASCICULE DE BREVET EUROPEEN

(11) **EP 1 442 969 B1**
(45) Date de publication et mention de la délivrance du brevet: **15.11.2006**
(21) Numéro de dépôt: 04290230.4
(22) Date de dépôt: 29.01.2004
(51) Int. Cl.: B62D 55/30

(54) **Véhicule à chenilles à train de roulement de longeur variable**
Raupenfahrzeug mit variablem Radstand
Tracked vehicle with variable wheelbase

(30) Priorité: 03.02.2003 FR 0301183
(43) Date de publication de la demande: 04.08.2004
(73) Titulaire: Coeuret, Bernard, 14310 Epinay sur Odon (FR)
(72) Inventeur: Coeuret, Bernard, 14310 Epinay sur Odon (FR)
(74) Mandataire: Cabinet HERRBURGER

(56) Documents cités:
- FR-A- 2 818 606
- US-A- 5 885 130
- US-B1- 6 315 374

## Description

### Domaine de l'invention

La présente invention concerne un véhicule à chenilles à deux trains de roulement comportant chacun un caisson portant des galets d'appui par lesquels le véhicule roule sur la chenille, un barbotin entraînant le véhicule par rapport à la chenille, un tendeur comportant un bras coulissant muni d'un organe de tension poussant le bras par rapport au caisson du train de roulement ainsi qu'une chenille passant sur les galets d'appui, le barbotin et le tendeur.

Les véhicules à chenilles existent sous de multiples formes de réalisation, pour les applications les plus diverses allant d'engins ou de véhicules de chantier équipés d'outils tels que des bras de levage, des pelles, des lames de bulldozer jusqu'à des véhicules tout terrain et des véhicules utilisés dans l'agriculture.

### But de l'invention

La présente invention a pour but de développer un véhicule à chenilles permettant de modifier la longueur d'appui de la chenille sur le sol pour adapter le véhicule à des situations d'utilisation ou de fonctionnement particulières pour améliorer la stabilité du véhicule ou favoriser sa manoeuvrabilité.

### Exposé de l'invention et avantages

A cet effet, l'invention concerne un véhicule à chenilles du type défini ci-dessus caractérisé en ce que le tendeur comporte :
- un balancier relié au bras en un point d'articulation et portant respectivement, à chacune de ses extrémités, un galet supérieur et un galet inférieur appliqués tous deux contre la chenille,
- la longueur hors tout du segment compris entre le point d'articulation du balancier sur le bras et le contour du galet inférieur est supérieur à la hauteur du point d'articulation par rapport à la surface de roulement de la chenille.

L'équipage des deux galets portés par le balancier à l'extrémité du bras du tendeur permet, au train de roulement, d'absorber les obstacles pour amorcer le passage de la partie aval de la chenille et du train de roulement sur un tel obstacle à la fois parce que l'avant du train de roulement forme avec la chenille une rampe permettant d'escalader l'obstacle et, parce que, l'effet de cette rampe est atténué par le mouvement de pivotement du balancier permettant au galet inférieur de s'esquiver d'une certaine manière en formant derrière lui une nouvelle petite rampe facilitant le passage des galets d'appui.

Ce mouvement facilite également la montée de l'engin sur une rampe, telle qu'une rampe d'accès d'un véhicule, à l'amorce de la rampe entre le terrain « plat » et la rampe et à l'extrémité de la rampe lorsque celle-ci rejoint le plateau du véhicule ou, plus généralement, la surface située après la rampe.

Suivant un développement avantageux, le véhicule à chenilles comporte un vérin reliant le balancier au bras pour commander le pivotement du balancier d'une première position pour laquelle le galet supérieur est avancé vers une seconde position dans laquelle le galet inférieur est avancé, le vérin forçant le bras et le galet inférieur à passer à la verticale du point d'articulation du balancier.

Alors que, de manière générale, le balancier porté par le tendeur se met dans la position d'équilibre, le galet supérieur étant avancé et le galet inférieur en retrait, il est possible, selon ce développement de l'invention, de forcer le balancier dans une position inversée, augmentant la longueur de la surface d'appui du train de roulement sur le sol. Pour arriver dans cette seconde position d'appui, le vérin d'actionnement doit forcer le basculement du balancier en soulevant ainsi légèrement le train de roulement, c'est-à-dire la partie correspondante du véhicule. Au cours de ce soulèvement, le galet inférieur porté par le balancier passe à la verticale du point d'articulation du balancier qui correspond au point de soulèvement le plus haut puis le galet prend sa position avancée définie par le vérin, le galet supérieur étant en retrait.

Cette position avancée du galet inférieure augmente la longueur d'appui du train de roulement sur le sol, c'est-à-dire le polygone de sustentation. Une telle augmentation de la longueur d'appui est particulièrement intéressante si le véhicule est un engin de travaux publics tels qu'une pelleteuse, travaillant vers l'avant et nécessitant alors un appui déplacé aussi loin que possible vers l'avant, appui qui vient en complément de manière très intéressante à l'appui que l'on peut avoir par l'abaissement de la lame de nivellement. Dans ces conditions, la lame ne joue que le rôle de butée évitant que le véhicule n'avance.

De plus, cet appui sur toute la surface de la chenille est plus intéressant et plus stable que celui de la seule lame qui risque de s'enfoncer dans le terrain.

En général cette position avancée du galet des deux tendeurs des trains de roulement est utilisée pour augmenter la stabilité du véhicule à l'arrêt.

Pendant les mouvements du véhicule, si celui-ci ne transporte pas de charge en porte-à-faux, il est préférable de raccourcir le train de roulement, surtout pour faciliter les manoeuvres et les changements de direction de l'engin.

De façon avantageuse, dans le cas d'un tendeur équipé d'un vérin de basculement du balancier, le bras est constitué par une pièce en forme de L dont l'extrémité du bras horizontal porte l'articulation du balancier et l'extrémité du bras vertical porte une extrémité du vérin.

### Dessins

La présente invention sera décrite ci-après de manière plus détaillée à l'aide d'exemples de réalisation d'un véhicule représenté dans les dessins annexés dans lesquels :
- la figure 1 est une vue de côté d'un train à chenilles, le véhicule n'étant pas représenté,
- la figure 2 est une vue en coupe II II de la figure 1,
- la figure 3 est une vue de détail du tendeur du véhicule à chenilles montrant le fonctionnement du tendeur,
- les figures 4A, 4B montrent un second mode de réalisation d'un véhicule selon l'invention dans ses deux positions de fonctionnement, l'une dans la position du train de roulement court (figure 4A) et l'autre dans la position du chemin de roulement long (figure 4B),
- la figure 5 montre un exemple de véhicule à chenilles équipé d'un train de roulement selon l'invention.

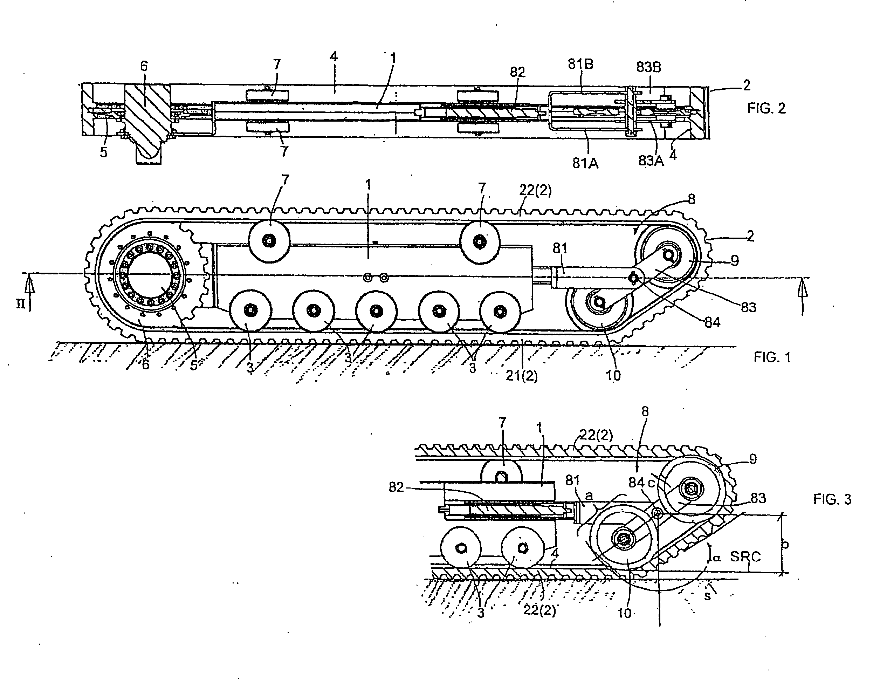

Selon les figures 1 et 2, l'invention concerne un véhicule à chenilles à deux trains de roulement dont un seul est représenté.

Le train de roulement se compose d'un caisson 1 formant l'ossature du train de roulement et portant les différents éléments du train de roulement, à savoir outre la chenille 2, des galets d'appui 3 roulant sur les chemins de roulement 4 de la chenille, un barbotin 5, c'est-à-dire une roue d'entraînement équipée par exemple d'un motoréducteur hydraulique 6 et engrenant dans la chenille 2 pour faire rouler le train de roulement sur la chenille, des galets supérieurs 7 pour soutenir le brin de retour 22 de la chenille 2 et un tendeur 8 mettant la chenille en tension. Ce tendeur 8 se compose d'un bras coulissant 81 muni d'un organe de tension 82, par exemple un vérin permettant d'exercer une force déterminée sur le tendeur. Ce vérin 82 est porté par le caisson 1. L'extrémité avant du vérin, c'est-à-dire la tige du vérin comporte le bras 81 muni d'un balancier 83 relié au bras par une articulation 84. Ce balancier 83 en forme de levier du premier genre porte à chacune de ses extrémités, un galet : un galet supérieur 9 appliqué contre la partie supérieure de l'avant de la chenille 2, à l'intérieur, contre le chemin de roulement 4 et un galet inférieur 10, appliqué contre la partie inférieure de l'avant de la chenille. Le balancier 83 est poussé dans cette position.

Selon la figure 2, le bras 81 est constitué par une double chape 81A, 81B portant le balancier 83 par l'axe d'articulation 84, le balancier 83 étant constitué lui-même par deux leviers parallèles 83A, 83B, venant de part et d'autre du galet supérieur 9 et du galet inférieur 10.

La figure 3 montre schématiquement le fonctionnement du tendeur 8. Dans cette figure, on a représenté le niveau du terrain S et le niveau SRC du chemin de roulement 4 à l'intérieur de la chenille.

Selon l'invention, la longueur hors tout (a) du segment géométrique compris entre le point d'articulation 84 et le contour du galet 10 inférieur est supérieure à la hauteur (b) du point d'articulation 84 par rapport à la surface de roulement SRC.

Il serait également possible de prendre en considération la longueur du segment compris entre le point d'articulation et le contour du galet inférieur augmenté de l'épaisseur de la chenille pour se référer à la hauteur de l'articulation par rapport au sol (s).

Selon la figure 3, le balancier 83 est uniquement soumis à la poussée exercée par le tendeur 8. Du fait de cette poussée, le galet supérieur 9 est appliqué contre la surface de roulement du côté inférieur de la chenille 2 dont la réaction se traduit par un couple autour du point d'articulation 84 dans la direction C. Ce couple tend à faire basculer le galet inférieur 10 vers l'avant, appliquant donc le galet inférieur 10 contre la chenille 2 elle-même en appui sur le sol (s).

Si le train de roulement n'était pas en appui sur le sol, les deux galets 9, 10 avec le balancier 83 se mettraient dans une position d'équilibre qui, suivant les données géométriques de cette structure, pourrait être sensiblement perpendiculaire au bras 81, le brin supérieur 22 et le brin inférieur 21 de la chenille ne restant pas nécessairement parallèles à leur direction représentée à la figure 3.

L'importance de l'angle α de la rampe de la chenille 2 dépend de la géométrie de l'ensemble : bras, balancier, diamètre des galets supérieur et inférieur.

Dans la figure 3, le bras 81 est sensiblement à mi-hauteur du brin d'appui 21 et du brin de retour 22 de la chenille 2 ; le balancier 83 a deux bras de levier de même longueur et le galet supérieur 9 et le galet inférieur 10 sont de même diamètre. Mais cette géométrie particulière ne correspond qu'à un exemple de réalisation, simple à cause de sa très grande symétrie.

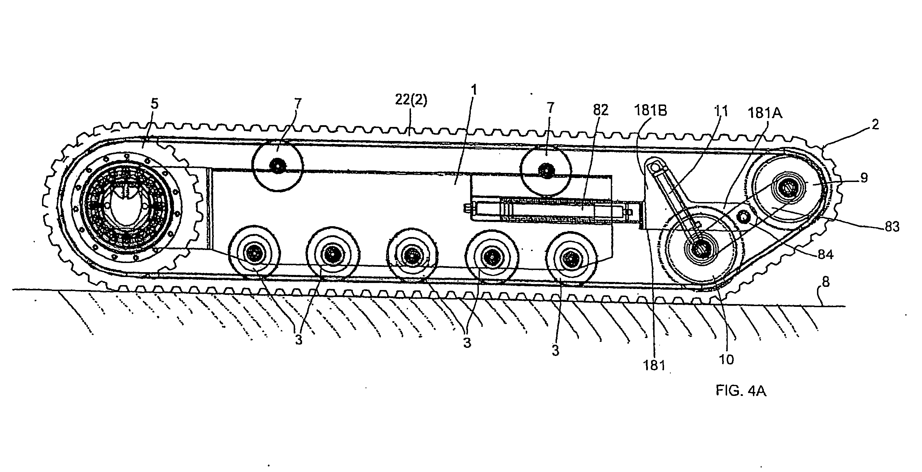

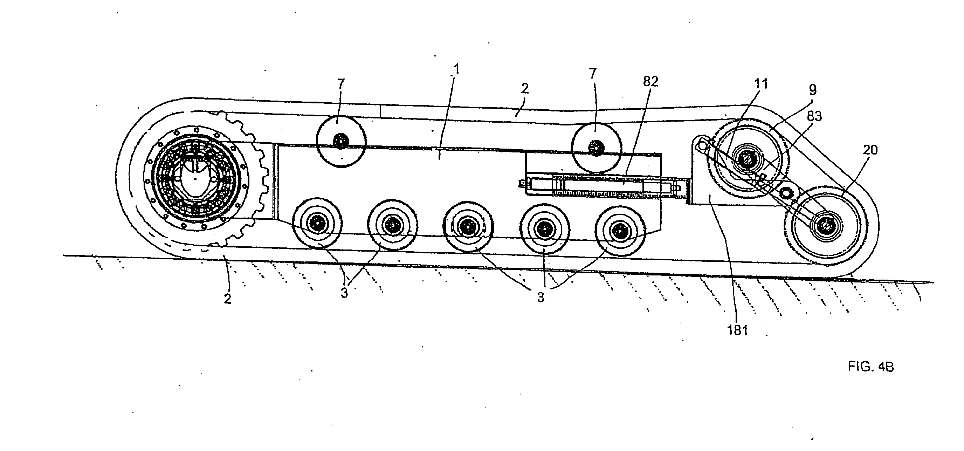

Les figures 4A, 4B montrent un développement de cette caractéristique générale. Dans la variante représentée à la figure 4A, le balancier 83 est relié au bras 181 par un vérin d'actionnement 11, qui peut commander le mouvement du balancier 83 pour le forcer de la position « naturelle » représentée à la figure 4A dans la position avancée représentée à la figure 4B. Pour cela, le balancier 83 doit passer par la verticale du point d'articulation 84 et ce mouvement, étant donné les relations de longueur définies ci-dessus pour le bras du balancier portant le galet inférieur 9 et la taille du galet inférieur 9, se traduit par un soulèvement plus ou moins fort de la partie avant du train de roulement.

Après le passage de la verticale du point d'articulation 84, le train de roulement s'abaisse de nouveau.

La position avec rampe tournée vers l'avant représentée à la figure 4A est la position naturelle pour passer sur des obstacles et circuler. Cette position naturelle peut être libre, le vérin 11 commandant le balancier 83 étant en circuit ouvert. Cette position peut également être avec précontrainte, en maintenant dans le vérin une certaine pression.

La position avancée de la figure 4B est une position précontrainte, le vérin 11 n'étant pas en circuit ouvert mais bloqué pour constituer un point d'appui ferme du galet inférieur 10 contre la chenille 2 et, par suite, le sol (S).

Le mode de réalisation du bras 181 selon les figures4A, 4B est légèrement différent du bras, simple prolongement du vérin 82 des figures 1 à 3 pour intégrer le point d'appui du vérin d'actionnement 11. Pour cela, le bras 181 est formé par deux chapes en L parallèles dont la branche « horizontale » 181A, dans le prolongement du tendeur, porte l'articulation 84 du balancier 83 et la branche « verticale » 181B porte l'articulation de la seconde extrémité du vérin d'actionnement 11.

Les lignes d'alimentation des vérins ne sont pas représentées.

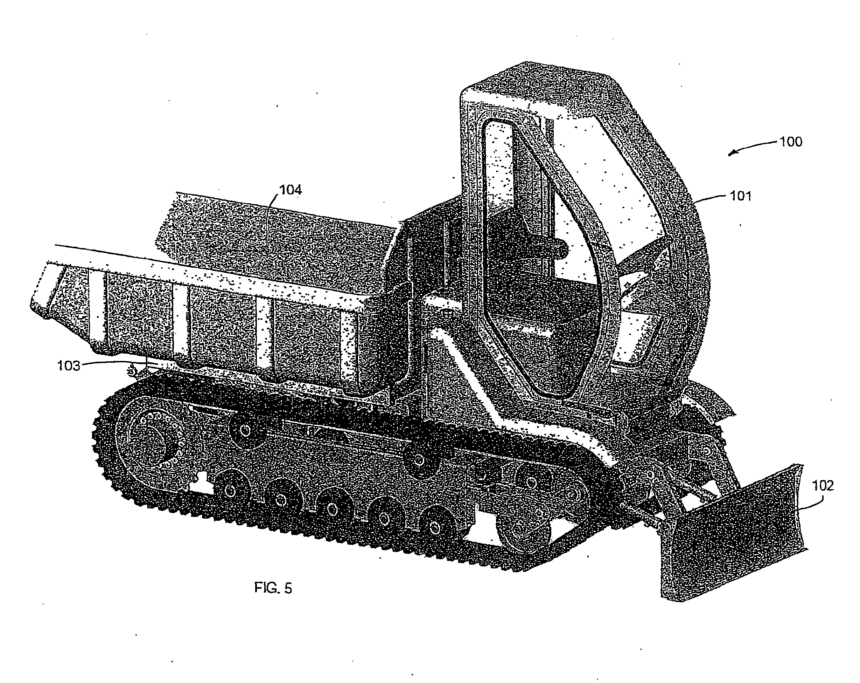

La figure 5 montre un exemple de véhicule à chenilles 100 selon l'invention avec deux trains de roulement selon le premier mode de réalisation (figures 1 à 3). Ce véhicule à chenilles est un petit véhicule de transport comportant, outre la cabine 101 placée à l'avant, également une lame de nivellement 102 ; à l'arrière 103 le châssis porte une benne 104.

## Revendications

1. Véhicule à chenilles à deux trains de roulement comportant chacun un caisson (1) portant des galets d'appui (3) par lesquels le véhicule roule sur la chenille (2), un barbotin (5) entraînant le véhicule par rapport à la chenille, un tendeur (8) comportant un bras (81) coulissant muni d'un organe de tension (82) poussant le bras par rapport au caisson (1) du train de roulement ainsi qu'une chenille passant sur les galets d'appui (3), le barbotin (5) et le tendeur (8),
**caractérisé en ce que**
le tendeur (8) comporte
- un balancier (83) relié au bras (81) en un point d'articulation (84) et portant respectivement, à chacune de ses extrémités, un galet supérieur (9) et un galet inférieur (10) appliqués tous deux contre la chenille (2),
- la longueur hors tout (a) du segment compris entre le point d'articulation (84) du balancier (83) sur le bras (81) et le contour du galet inférieur (10) est supérieur à la hauteur (b) du point d'articulation (84) par rapport à la surface de roulement (SRC) de la chenille (2).

2. Véhicule à chenilles selon la revendication 1,
**caractérisé en ce qu'**
il comporte un vérin d'actionnement (11) reliant le balancier (83) au bras (181) pour commander le pivotement du balancier (83) d'une première position pour laquelle le galet supérieur (9) est avancé, vers une seconde position dans laquelle le galet inférieur (10) est avancé, le vérin (11) forçant le bras (81) et le galet inférieur (10) à passer à la verticale du point d'articulation (84) du balancier (83).

3. Véhicule à chenilles selon la revendication 2,
**caractérisé en ce que**
le bras (181) est constitué par une pièce en forme de L dont l'extrémité de la branche horizontale (181A) porte l'articulation (84) du balancier (83) et l'extrémité de la branche verticale (181B) porte une extrémité du vérin d'actionnement (11).

## Claims

1. Tracked vehicle with two drive trains, each comprising a box-type structure (1) bearing support rollers (3) by means of which the vehicle rolls on the track (2), a sprocket wheel (5) driving the vehicle relative to the track, a tensioning system (8) comprising a sliding arm (81) fitted with a tensioning member (82) pushing the arm relative to the box-type structure (1) of the drive train, and a track passing over the support rollers (3), sprocket wheel (5) and tensioning system (8),
**characterised in that** the tensioning system (8) comprises
- a beam (83) linked to the arm (81) at an articulation point (84) and bearing respectively, at each of its ends, an upper roller (9) and a lower roller (10) both applied against the track (2),
- the overall length (a) of the segment disposed between the articulation point (84) of the beam (83) on the arm (81) and the contour of the lower roller (10) is bigger than the height (b) of the articulation point (84) relative to the rolling surface (SRC) of the track (2).

2. Tracked vehicle as claimed in claim 1,
**characterised in that**
it has an actuator jack (11) linking the beam (83) to the arm (181) in order to control the pivoting movement of the beam (83) from a first position in which the upper roller (9) is moved forwards to a second position in which the lower roller (10) is moved forwards, which jack (11) forces the arm (81) and the lower roller (10) to pass through the vertical of the articulation point (84) of the beam (83).

3. Tracked vehicle as claimed in claim 2,
**characterised in that**
the arm (181) comprises an L-shaped piece, the horizontal branch (181A) of which bears the articulation (84) of the beam (83) and the vertical branch (181 B) of which bears an end of the actuator jack (11).

## Patentansprüche

1. Raupenfahrzeug mit zwei Raupenfahrwerken, die je einen Kasten (1), der Stützrollen (3) trägt, umfassen, über welche das Fahrzeug auf der Kette (2) abrollt bzw. fährt, ein Kettenrad (5), welches das Fahrzeug gegenüber der Kette antreibt, ein Spannglied (8), das einen Gleitarm (81) umfasst, der mit einem Spannorgan (82) versehen ist, welches den Arm bezogen auf den Kasten (1) des Raupenfahrwerks beaufschlagt, sowie eine über die Stützrollen (3) laufendende Kette und schließlich das Kettenrad (5) und das Spannglied (8) aufweist,
**dadurch gekennzeichnet, dass**
- das Spannglied (8) einen Schwinghebel bzw. Balancier (83) aufweist, der mit dem Arm (81) an einem Gelenkpunkt (84) verbunden ist und jeweils an jedem seiner Enden eine obere Rolle (9) und eine untere Rolle (10) trägt, die alle beide gegen die Kette (3) gedrückt bzw. beaufschlagt werden,
- wobei die Länge über alles (a) des Segments zwischen dem Gelenkpunkt (84) des Schwinghebels (83) am Arm (81) und dem Umfang der unteren Rolle (10) größer als die Höhe (b) des Gelenkpunkts (84) bezogen auf die Lauffläche (SRC) der Kette (2) ist.

2. Raupenfahrzeug nach Anspruch 1,
**dadurch gekennzeichnet, dass**
es einen Betätigungszylinder (11) umfasst, der den Schwinghebel (83) mit dem Arm (181) verbindet, um das Verschwenken des Schwinghebels (83) aus einer ersten Stellung, für die die obere Rolle (9) vorgerückt ist, gegen eine zweite Stellung, in der die untere Rolle (10) vorgerückt ist, zu steuern, wobei der Arbeitszylinder (11) den Arm (81) und die untere Rolle (10) veranlasst, in die Vertikale des Gelenkpunkts (84) des Schwinghebels (83) überzugehen.

3. Raupenfahrzeug nach Anspruch 2,
**dadurch gekennzeichnet, dass**
der Arm (181) aus einem L-förmigen Werkstück besteht, dessen Ende am horizontalen Schenkel (181A) den Gelenkpunkt des Schwinghebels (83) trägt und das Ende des vertikalen Schenkels (181 B) ein Ende des Arbeitszylinders (11) trägt.
